# EUROPEAN PATENT APPLICATION

(11) **EP 3 398 434 A1**
(43) Date of publication of application: **07.11.2018**
(21) Application number: 17169724.6
(22) Date of filing: 05.05.2017
(51) Int. Cl.: A01M 23/14, A01M 27/00

(54) **PISTON UNIT FOR AN AUTOMATIC RECHARGEABLE TRAP**

(71) Applicant: Skehojgaard Development ApS, 9610 Norager (DK)
(72) Inventor: SØRENSEN, Kurt, 9610 Nørager (DK)
(74) Representative: Larsen & Birkeholm A/S

(57) **Abstract**

The present invention relates to automatic rechargeable rodent kill traps, and more specifically to the present invention relates to a piston unit for an automatic rechargeable mechanical trap comprising a piston, and a piston bore. The piston bore comprises a1) a threaded cylindrical rod adapted to rotate around its central axis within the piston bore cavity; wherein the first end of the threaded cylindrical rod is adapted for engagement with a motor unit, and wherein the second end is a free end; b1) a spring positioned within the piston bore cavity, and around or alongside the threaded cylindrical rod; and c1) a lock plate comprising i) a threaded opening configured for receiving the threaded cylindrical rod; and ii) a protrusion extending radially away from the threaded opening. The piston comprises a2) a central channel adapted for receiving the threaded cylindrical rod, and wherein the upper part of the central channel further comprises a recess configured for receiving a protrusion of the lock plate. The bottom part of the recess comprises a cavity configured for receiving said protrusion of the lock plate in a locking configuration when the lock plate is rotated around the central axis of the threaded cylindrical rod.

## Description

### Technical field of the invention

The present invention relates to automatic rechargeable rodent kill traps.

### Background of the invention

Urban environments provide suitable conditions for certain species of rodents, particularly Norway rats and house mice, to proliferate. Mice and rats generally pose a health hazard due to disease spreading. Rat urine per se presents an additional health hazard because of the potential presence of Leptospira spp., which can enter the blood through skin cuts causing the potentially fatal Weil's disease. In addition, presence of rats and mice often impose a significant economic cost through the potential destruction of building materials, such as wall and roof insulation, electrical wiring, packaging, and contaminating foods etc. Mechanical traps are generally used to kill rodents, as the use of poison has been prohibited or restricted in many territories. However, at least for free standing mechanical traps, only a few traps are capable of recharging. The remaining traps must be manually emptied and recharged. US20140059917 discloses an automatic rechargeable mechanical and pneumatic trap with a trigger mechanism configured to be actuated by an animal, and a kill mechanism powered by compressed gas. The trigger includes a trigger rod. Pivoting movement of the trigger rod in any direction away from the rest position may result in actuation of the trigger. However, this configuration has problems with retaining a constant pressure, why the strike plate will strike with varying force from time to time.

### Object of the Invention

The objective of the present invention is to provide an improved kill mechanism for a mechanical trap with a repeatedly accurate stroke force.

### Description of the Invention

One aspect of the present invention relates to a piston unit for an automatic rechargeable mechanical trap comprising:
- a piston; and
- a piston bore;
wherein the piston bore comprises:
a1) a threaded cylindrical rod adapted to rotate around its central axis within the piston bore cavity; wherein the first end of the threaded cylindrical rod is adapted for engagement with a motor unit, and wherein the second end is a free end;
b1) a spring positioned within the piston bore cavity, and around or alongside the threaded cylindrical rod; and
c1) a lock plate comprising i) a threaded opening configured for receiving the threaded cylindrical rod; and ii) a protrusion extending radially away from the threaded opening;
and wherein the piston comprises:
a2) a central channel adapted for receiving the threaded cylindrical rod, and wherein the upper part of the central channel further comprises a recess configured for receiving a protrusion of the lock plate; wherein the bottom part of the recess comprises a cavity configured for receiving said protrusion of the lock plate in a locking configuration when the lock plate is rotated around the central axis of the threaded cylindrical rod.

Mechanical traps are characterised by killing means that strikes the rodent and almost instantly kills the rodent. In the present context, the killing means is the piston unit.

The piston bore is adapted for holding a piston that moves out of and moves within the piston bore cavity during the triggering and recharging operations.

The piston bore comprises a threaded cylindrical rod adapted to rotate around its central axis within the piston bore cavity. The first end of the threaded cylindrical rod is adapted for engagement with a motor unit of a trap, and the second end is a free end. The piston bore also comprises a spring positioned within the piston bore cavity, and around or alongside the threaded cylindrical rod. The spring is compressed when the piston unit is charged, and partly forces the piston out of the piston bore cavity when the piston bore is triggered to release. The piston will thereby break the neck of the rodent.
The piston bore further comprises a lock plate comprising i) a threaded opening configured for receiving the threaded cylindrical rod; and ii) a protrusion extending radially away from the threaded opening. The lock plate can thereby move up and down the threaded cylindrical rod when the threaded cylindrical rod is rotated. The protrusion is used to lock the piston to the piston bore.

The piston comprises a central channel adapted for receiving the free end of the threaded cylindrical rod. This configuration allows for the piston to enter the piston bore cavity. The upper part of the central channel further comprises a recess configured for receiving a protrusion of the lock plate. There may be multiple protrusions and multiple recesses. The bottom part of a recess comprises a cavity configured for receiving the protrusion of the lock plate in a locking configuration when the lock plate is rotated around the central axis of the threaded cylindrical rod. Thereby, the protrusion is moved out of the recess and into the cavity, why the lock plate cannot move - it is locked to the cavity. The cavity serves two functions. The first function is when the piston unit is in a charged state, where the piston is retracted into the piston bore cavity, and the spring is compressed. Here, the cavity serves as a part of the trigger. When the protrusion is moved out of the cavity during a triggering, the piston is forced out of the piston bore. The cavity displaces the same distance as the piston, as it is part thereof. In order to recharge the piston unit, the lock plate must find its way back to the cavity. This is done by continuing to rotate the threaded cylindrical rod, whereby the lock plate travels towards the free end of said threaded cylindrical rod until it reaches the bottom of the recess, and the protrusion enters the cavity. The rotation of the threaded cylindrical rod must then be reversed in order for the lock plate to retract the piston into the piston bore.

In one or more embodiments, the piston further comprises a peripheral channel running peripherally to the central channel, and configured for receiving one of the spring end portions. This configuration allows for a very compact unit.

In one or more embodiments, the first end of the threaded cylindrical rod is configured as a toothed wheel adapted for engagement with a motor unit.

In one or more embodiments, the inner surface of the piston bore comprises one or more guide tracks, and wherein the outer surface of the piston comprises one or more protrusions configured for slidably engaging with said guide tracks. The guide tracks and the protrusions are preferably running in the longitudinal direction of the piston unit.

In one or more embodiments, the outer surface of the piston comprises one or more guide tracks, and wherein the inner surface of the piston bore comprises one or more protrusions configured for slidably engaging with said guide tracks. The guide tracks and the protrusions are preferably running in the longitudinal direction of the piston unit.

Another aspect relates to the use of a piston unit according to the present invention as a killing means in an automatic rechargeable trap.

Yet another aspect relates to an automatic rechargeable trap comprising a killing means comprising a piston unit according to the present invention.

In one or more embodiments, the automatic rechargeable trap further comprises a motor unit configured to control the release of the piston from a charged position during a triggering by rotating the threaded cylindrical rod; and configured to recharge the piston within the piston bore by rotating the threaded cylindrical rod.

In one or more embodiments, the motor unit, during the release operation, is configured to rotate the threaded cylindrical rod such that the protrusion of the lock plate moves out of the locking configuration within the cavity of the recess.

In one or more embodiments, the motor unit, during the recharge operation, is configured to rotate the threaded cylindrical rod such that the lock plate moves down towards the free end of the threaded cylindrical rod until it reaches the bottom of the recess; and wherein when reaching the bottom of the recess, the motor unit is configured to change its rotational direction, thereby rotating the lock plate such that the protrusion of the lock plate moves into a locking configuration within the cavity of the recess, thereby allowing the piston to be drawn back into the piston bore.

In one or more embodiments, the automatic rechargeable trap further comprises a housing with a rat and mouse entry opening positioned in the side wall and/or in the base wall; and wherein the spring driven killing means is positioned at a level above the level of the rat and/or mouse entry opening, such that a rat or mouse can reach the killing means when standing within the housing on their hind legs.

In one or more embodiments, the automatic rechargeable trap further comprises a species monitoring means configured for determining the species by monitoring the degree of advancement of the killing means during an individual triggering. If a mouse has activated the killing means, the killing means will travel a longer distance than for a rat due to the difference in size. Hence, this method of distinguishing between mice and rats is simple and reliable.

In one or more embodiments, the automatic rechargeable trap further comprises a kill monitoring means. The kill monitoring means should simply be able to detect each time the killing means is activated. The kill monitoring means could be embodied as e.g. a shock sensor, or a motion sensor.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows a side view of a piston unit in a charged position in accordance with various embodiments of the invention, as well as a cross-section of said view;
Figure 2 shows a perspective view of the cross-section in Figure 1;
Figure 3 shows a side view of a piston unit in a released position in accordance with various embodiments of the invention, as well as a cross-section of said view;
Figure 4 shows a perspective view of the cross-section in Figure 3;
Figure 5 shows a close-up view of Figure 4;
Figure 6 shows a side view of a piston unit during a recharging operation in accordance with various embodiments of the invention, as well as a cross-section (A-A) of said view;
Figure 7 shows a perspective view of the cross-section in Figure 6;
Figure 8 shows a close-up view of Figure 7;
Figure 9 shows a cross-section (B-B) of the piston unit in Figure 6, as well as a perspective view of said cross-section (B-B);
Figure 10 shows a perspective view of an automatic rechargeable trap comprising a killing means comprising a piston unit in accordance with various embodiments of the invention; and
Figure 11 is a cross-section of an automatic rechargeable trap comprising a killing means comprising a piston unit in accordance with various embodiments of the invention.

### References

- 100: Piston unit
- 200: Piston
- 210: Central channel
- 212: Recess
- 214: Cavity
- 220: Peripheral channel
- 230: Protrusion
- 300: Piston bore
- 310: Threaded cylindrical rod
- 312: First end
- 313: Toothed wheel
- 314: Second end
- 320: Spring
- 330: Lock plate
- 332: Protrusion
- 340: Guide track
- 400: Automatic rechargeable trap
- 410: Motor unit
- 420: Housing
- 430: Rat and mouse entry opening
- 440: Side wall
- 450: Base wall
- 460: Trigger rod

### Detailed Description of the Invention

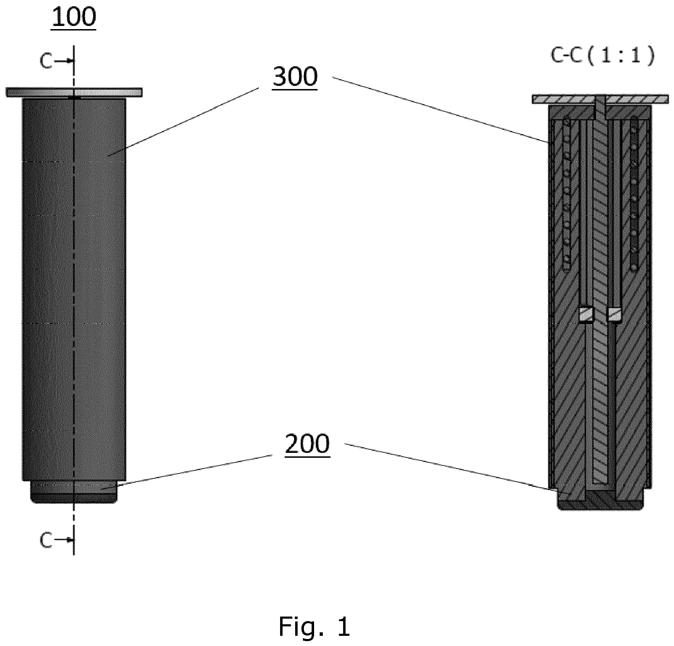

Figure 1 shows a side view of a piston unit 100 in a charged position, as well as a cross-section of said view. The piston unit 100 comprises a piston 200 and a piston bore 300.

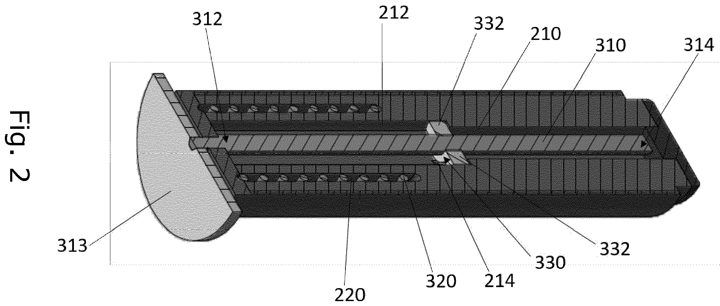

Figure 2 shows a perspective view of the cross-section in Figure 1. The piston bore 300 comprises a threaded cylindrical rod 310 adapted to rotate around its central axis within the piston bore cavity. The first end 312 of the threaded cylindrical rod 310 is adapted for engagement with a motor unit, and the second end 314 is a free end. The piston bore 300 also comprises a spring 320 positioned within the piston bore cavity, and around the threaded cylindrical rod 310. The piston bore 300 further comprises a lock plate 330 comprising a threaded opening (the threaded cylindrical rod 310 is positioned therein) configured for receiving the threaded cylindrical rod 310; and a protrusion 332 extending radially away from the threaded opening (here shown in a configuration with two protrusions).
The piston 200 comprises a central channel 210 adapted for receiving the threaded cylindrical rod 310. The upper part of the central channel 210 further comprises a recess 212 configured for receiving a protrusion 332 of the lock plate 330. The bottom part of the recess 212 comprises a cavity 214 configured for receiving the protrusion 332 of the lock plate 330 in a locking configuration when the lock plate 330 is rotated around the central axis of the threaded cylindrical rod 310.

The first end 312 of the threaded cylindrical rod 310 is configured as a toothed wheel 313 (the teeth are not shown) adapted for engagement with a motor unit.

The piston 200 is also shown with a peripheral channel 220 running peripherally to the central channel 210, and configured for receiving one of the spring 320 end portions. The spring 320 is compressed when the piston unit 100 is charged, and partly forces the piston 200 out of the piston bore cavity when the piston bore 300 is triggered to release. The piston 200 will thereby break the neck of the rodent.

The cavity 214 serves two functions. The first function is when the piston unit 100 is in a charged state, where the piston 200 is retracted into the piston bore cavity, and the spring 320 is compressed. Here, the cavity 214 serves as a part of the trigger. When the protrusion 332 is moved out of the cavity 214 during a triggering, the piston 200 is forced out of the piston bore 300.

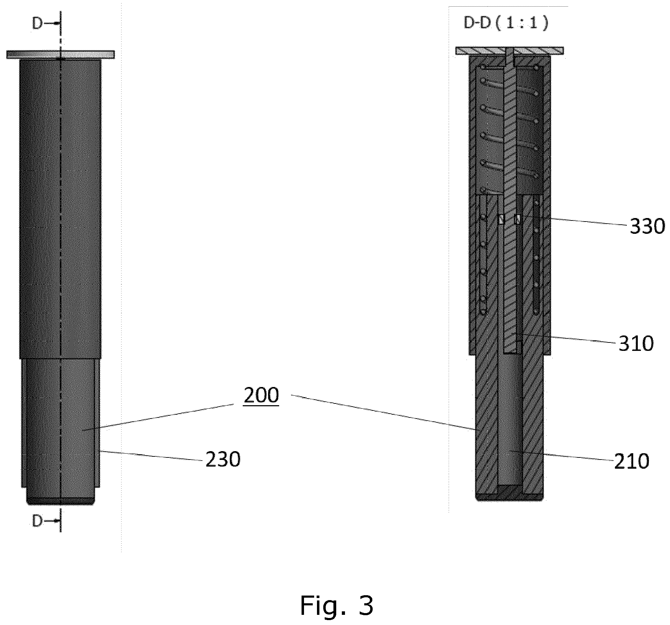

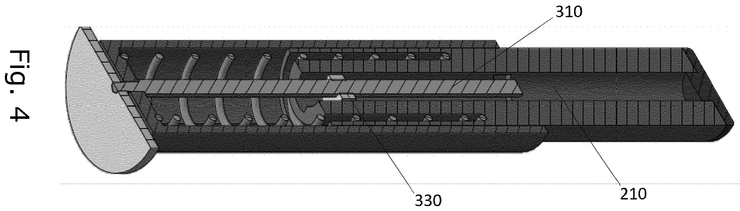

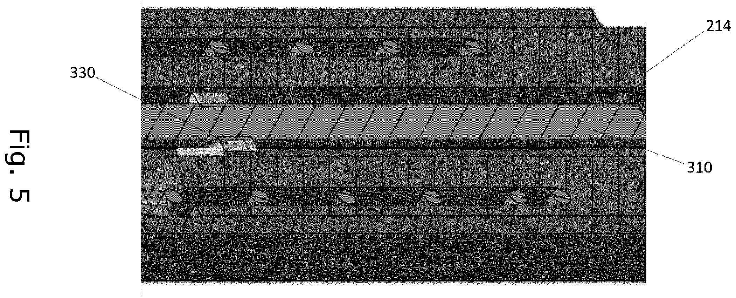

Figure 3 shows a side view of a piston unit in a released position in accordance with various embodiments of the invention, as well as a cross-section of said view. Figure 4 shows a perspective view of the cross-section in Figure 3, and Figure 5 shows a close-up view of Figure 4.

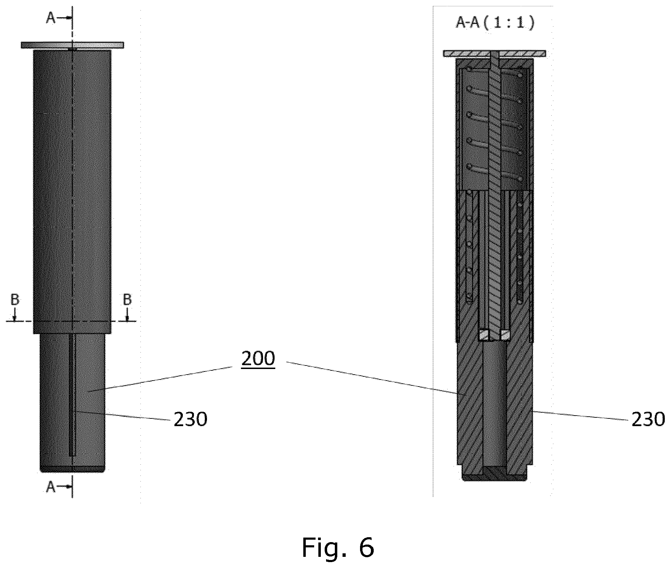

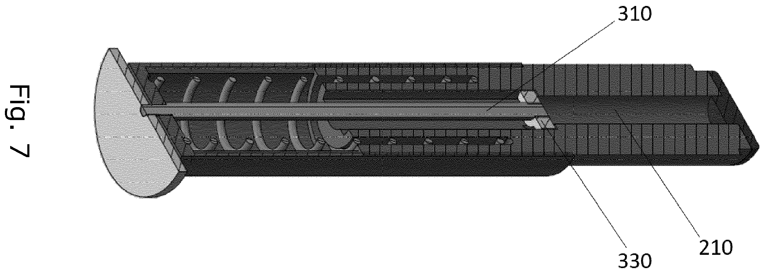

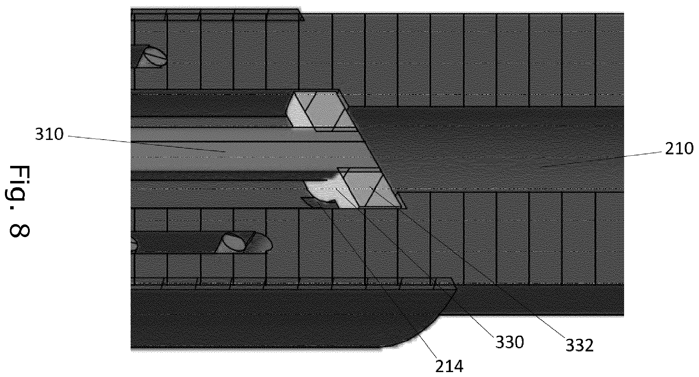

The cavity 214 displaces the same distance as the piston 200, as it is part thereof. In order to recharge the piston unit 100, the lock plate 330 must find its way back to the cavity 214. This is done by continuing to rotate the threaded cylindrical rod 310, whereby the lock plate 330 travels towards the free end of said threaded cylindrical rod 310 until it reaches the bottom of the recess 212, and the protrusion 332 enters the cavity 214. The rotation of the threaded cylindrical rod 310 must then be reversed in order for the lock plate 330 to retract the piston 200 into the piston bore 300. Figure 6 shows a side view of a piston unit during a recharging operation, as well as a cross-section (A-A) of said view. Figure 7 shows a perspective view of the cross-section in Figure 6, and Figure 8 shows a close-up view of Figure 7. Here, the lock plate 330 has just reached the bottom of the recess 212.

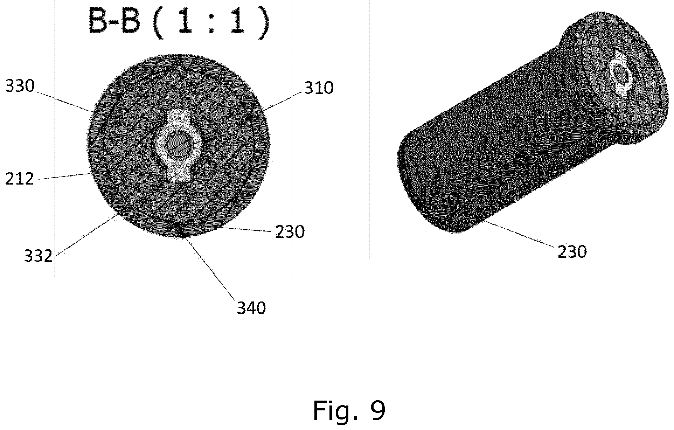

Figure 9 shows a cross-section (B-B) of the piston unit in Figure 6, as well as a perspective view of said cross-section (B-B). The inner surface of the piston bore 300 is shown with two guide tracks 340, and the outer surface of the piston 200 is shown with two protrusions 230 configured for slidably engaging with said guide tracks 340. This configuration avoids that the piston 200 will rotate within the piston bore 300 during the recharging operation.

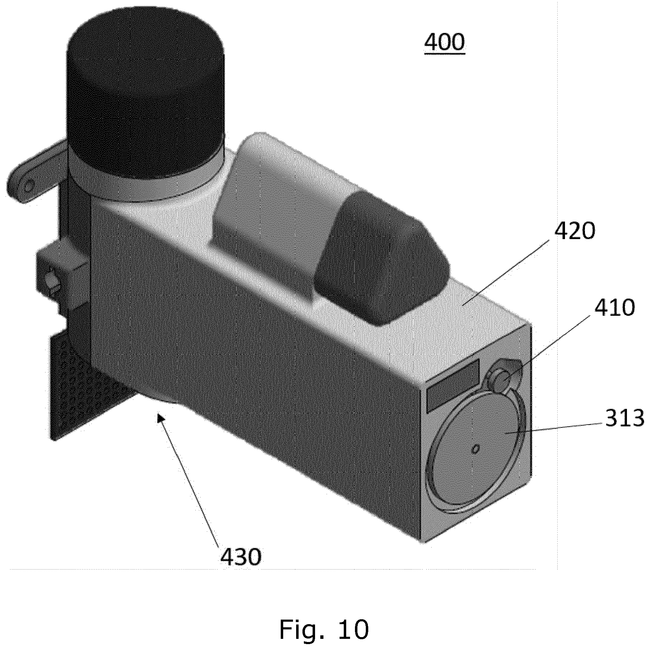

Figure 10 shows a perspective view of an automatic rechargeable trap comprising a killing means comprising a piston unit in accordance with various embodiments of the invention.

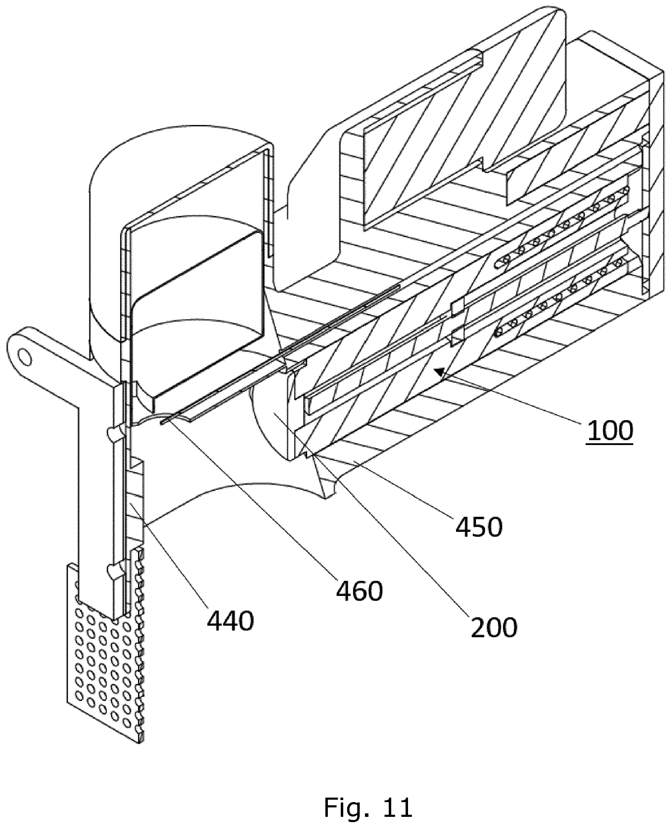

Figure 11 is a cross-section of an automatic rechargeable trap comprising a killing means comprising a piston unit in accordance with various embodiments of the invention. The automatic rechargeable trap 400 comprises a housing 420 with a rat and mouse entry opening 430 positioned in the side wall 440 and in the base wall 450. The piston unit 100 is positioned at a level above the level of the rat and/or mouse entry opening 430, such that a rat or mouse can reach the piston 200 when standing within the housing 420 on their hind legs, while activating a trigger rod 460 with its head.

## Claims

1. A piston unit (100) for an automatic rechargeable trap comprising:
- a piston (200); and
- a piston bore (300);
**characterized in that** the piston bore (300) comprises:
a1) a threaded cylindrical rod (310) adapted to rotate around its central axis within the piston bore cavity; wherein the first end (312) of the threaded cylindrical rod (310) is adapted for engagement with a motor unit, and wherein
the second end (314) is a free end;
b1) a spring (320) positioned within the piston bore cavity, and around or
alongside the threaded cylindrical rod (310); and
c1) a lock plate (330) comprising i) a threaded opening configured for receiving the threaded cylindrical rod (310); and ii) a protrusion (332) extending radially away from the threaded opening;
and wherein the piston (200) comprises:
a2) a central channel (210) adapted for receiving the threaded cylindrical rod (310), and wherein the upper part of the central channel (210) further comprises a recess (212) configured for receiving a protrusion (332) of the lock plate (330); wherein the bottom part of the recess (212) comprises a cavity (214) configured for receiving said protrusion (332) of the lock plate (330) in a locking configuration when the lock plate (330) is rotated around the central axis of the threaded cylindrical rod (310).

2. A piston unit (100) according to claim 1, wherein the piston (200) further comprises a peripheral channel (220) running peripherally to the central channel (210), and configured for receiving one of the spring (320) end portions.

3. A piston unit (100) according to any one of the claims 1-2, wherein the first end (312) of the threaded cylindrical rod (310) is configured as a toothed wheel (313) adapted for engagement with a motor unit.

4. A piston unit (100) according to any one of the claims 1-3, wherein the inner surface of the piston bore comprises one or more guide tracks (340), and wherein the outer surface of the piston (200) comprises one or more protrusions (230) configured for slidably engaging with said guide tracks (340).

5. Use of a piston unit (100) according to any one of the claims 1-4 as a killing means in an automatic rechargeable trap (400).

6. An automatic rechargeable trap (400) comprising a killing means comprising a piston unit (100) according to any one of the claims 1-4.

7. An automatic rechargeable trap (400) according to claim 6, further comprising a motor unit (410) configured to control the release of the piston (200) from a charged position during a triggering by rotating the threaded cylindrical rod (310); and configured to recharge the piston (200) within the piston bore (300) by rotating the threaded cylindrical rod (310).

8. An automatic rechargeable trap (400) according to claim 7, wherein the motor unit (410), during the release operation, is configured to rotate the threaded cylindrical rod (310) such that the protrusion (332) of the lock plate (330) moves out of the locking configuration within the cavity (214) of the recess (212).

9. An automatic rechargeable trap (400) according to any one of the claims 7-8, wherein the motor unit (410), during the recharge operation, is configured to rotate the threaded cylindrical rod (310) such that the lock plate (330) moves down towards the second end (314) of the threaded cylindrical rod (310) until it reaches the bottom of the recess (212); and wherein when reaching the bottom of the recess (212), the motor unit (410) is configured to change its rotational direction, thereby rotating the lock plate (330) such that the protrusion (332) of the lock plate (330) moves into a locking configuration within the cavity (214) of the recess (212), thereby allowing the piston (200) to be drawn back into the piston bore (300).

10. An automatic rechargeable trap (400) according to any one of the claims 7-9, further comprising:
a housing (420) with a rat and mouse entry opening (430) positioned in the side wall (440) and/or in the base wall (450); and wherein the piston unit (100) is positioned at a level above the level of the rat and/or mouse entry opening (430),
such that a rat or mouse can reach the piston (200) when standing within the housing (420) on their hind legs.
